# EUROPEAN PATENT SPECIFICATION

(11) **EP 3 702 757 B1**
(45) Date of publication and mention of the grant of the patent: **03.05.2023**
(21) Application number: 19160178.0
(22) Date of filing: 01.03.2019
(51) Int. Cl.: G01N 21/3504, G01M 15/10, G01N 21/39, G01N 21/35

(54) **MEASURING SYSTEM OF POLLUTANTS EMITTED BY MOTOR VEHICLES ON ROADS**
MESSSYSTEM VON SCHADSTOFFEN, DIE VON KRAFTFAHRZEUGEN AUF STRASSEN AUSGESTOSSEN WERDEN
SYSTÈME DE MESURE DE POLLUANTS ÉMIS PAR DES VÉHICULES AUTOMOBILES SUR DES ROUTES

(43) Date of publication of application: 02.09.2020
(73) Proprietor: Opus RS Europe, S.L., 28015 Madrid (ES)
(72) Inventor: de la Fuente Egido, Josefina, 28015 Madrid (ES); Montero, Jose, 28015 Madrid (ES)
(74) Representative: Lahidalga de Careaga, Jose Luis

(56) References cited:
- WO-A2-2010/026579
- CN-A- 103 871 249
- CN-A- 109 668 836
- US-A1- 2002 010 554

## Description

### OBJECT OF THE INVENTION

The proposed system consists of measuring up and down by laser light absorption or by laser dispersion of pollutants emitted by motor vehicles in roads and similar routes, where active elements such as lasers, detectors, computer power supply, etc., are located and accessible at the road level whereas passive optical elements are located on the upper part of each road lane. The light must be scanned from upper optical modules and their corresponding lanes.

### BACKGROUND

The increasing use of cars, trucks, planes and other combustion engine vehicles has understandably increased the growing concerns for the pollutant gases emitted by these sources. Carbon monoxide, the toxic by-product of an incomplete combustion, is the greatest contributor to air pollution and is a real threat to public health. Although carbon dioxide is not toxic, it is currently regarded as an air pollutant directly causing the greenhouse effect. Modern fuels generate excessive quantities of carbon dioxide that, according to scientists, are polluting the world's atmosphere. Today's engines also generate a certain amount of nitrogen oxides, ammonia, microparticles and other compounds which are pollutant and harmful to health, since they are generally responsible for eye irritation, nasal congestion and breathing problems.

Apart from the problems posed by the vehicle combustion engines, pollution is also produced by smoke emitted by residential chimneys and industrial smokestacks. Electrostatic precipitators and similar devices are common for the treatment of exhaust and smokestack gases, besides other industrial gases. However, conventional treatment devices are unsuitable to deal with the main problems of concentrations of carbon dioxide, carbon monoxide, nitrogen oxides, particles and other exhaust pollutants in exhaust gas.

In this sector many devices and methods to control exhaust gas pollutants are known. Electrostatic precipitation is widely used for these applications and it implies the application of high voltages to electrodes located in the exhaust gas stream. This process leads to the ionization of gas particles, which in turn makes that gas-suspended particles are charged by the contact with ionized gas particles. The charged particles are then collected by oppositely charged electrodes that must be eventually purified.

An important disadvantage of electrostatic precipitation is that only substances in tiny particles outside of the exhaust stream can be precipitated. This process is ineffective to remove gas pollutants such as carbon monoxide and carbon dioxide.

For that purpose, remote detection systems have been developed during many years. For example, US Patent US5210702 shows a system for the remote detection of carbon monoxide and carbon dioxide levels in vehicle emissions. This system uses an infrared (IR) source to project an IR radiation collimated beam through the exhaust plume of a passing vehicle. An optical device is then used to separate the different wavelengths of the beam and to direct them to particular photodetectors. Each photodetector generates an electrical signal based on the presence or the absence of a specific wavelength light. These electrical data are then sent to a computer used to assess and to compare carbon monoxide and carbon dioxide exhaust component rates. High-emission vehicles are identified from these rates. These rates may also be entered into a series of equations based on stoichiometric relationships between the exhaust components used to calculate the concentrations that would be observed with an exhaust pipe sounding line (with water and any air excess corrector).

Other methods to determine the emission concentrations were also tried using remote optical gas analyzers. One method, described in US Patent US4924095, uses multiple beam routes to take samples of a transversal section "slice" of the exhaust plume. The volume of this slice is determined and used to calculate the total concentration of one or more exhaust components. This kind of system was finally inaccurate and unfeasible in practice due to the irregular dispersion of the exhaust plume and significant difficulties to calculate the exhaust plume volume.

The remote vehicle emission test systems have enjoyed a lot of improvements since they were first known. Some examples include: the monitoring with associated video of the vehicle of which the emissions are going to be analyzed and number plate readers to actually "read" the number plate; the combination of UV and IR radiation sources for detectors with detecting channels of CO, CO₂, NOₓ, water and hydrocarbons; and multiple optical arrangements that separate the beam, beam routes, filtration and multiplexing over time. Although cars and trucks are the greatest source of polluting vehicles emissions, vehicles with smaller engines, such as motorbikes, mopeds and other small motor vehicles may also contribute to accumulate pollutants in cities. Since the engines of small motor vehicles normally generate exhaust plumes much smaller and less dense, current remote detection systems for cars and trucks may have problems to distinguish the exhaust readings of small motor vehicles from background noise. For example, a 50 cc moped produces an exhaust plume ten to twenty times smaller than a small car. Besides, the location of small engine exhaust plumes may be critical for a successful remote detection due to their small size and quick dispersion. Because of the varying height of exhaust pipes of motorbikes, a motorbike exhaust plume may be produced anywhere between 6 inches and 3 feet over the ground. Current remote detection systems may have problems to point at exhaust plumes of vehicles with small engines and varying height exhaust pipes.

These and other disadvantages of current remote detection systems are resolved with one or more preferred embodiments of the invention.

Document US 5877862 describes a system to analyze exhaust gases using adjustable infrared spectroscopy. A laser beam is directed through an exhaust plume, it reflects on a reflector and it is later received by a detector after a second pass through the exhaust plume.

Document US 4924095 describes an optical system to measure the exhaust pollution of cars and trucks, and which analyzes the possibility of multiple beam reflections with respect to figure 6 thereof.

Document US 5591975 describes an exhaust gas analysis system in which some photodetectors react to spectral absorption peaks of CO, CO₂, NO, H₂O and hydrocarbons. The composition of the plumes is calculated as percentages of the components based on the detected transmittances of the respective wavelengths.

Document WO 2010/026579 A2 describes a method and an apparatus for sensing the nature of vehicular emissions, wherein an overhead detector unit is positioned above each lane of a two-lane roadway, each detector unit comprising a Light Detection and Ranging (LIDAR) detector system and a Fourier Transform Infrared Spectroscopy (FTIS) detector system.

This invention is a new system that, due to its configuration, can determine the polluting components emitted by motor vehicles with such flexibility that allows to use both traditional light absorption techniques and laser dispersion spectroscopy techniques, which is based on molecular dispersion, detecting changes in the refractive index that appear next to a molecular transition, which prevents measuring mistakes in currently known procedures.

### DESCRIPTION OF DRAWINGS

In order to complement the description herein and in order to help to better understand the characteristics of this invention, in accordance with the example of a preferred embodiment of it, an exemplary, not limiting, set of drawings is attached to such description. These drawings show the following:

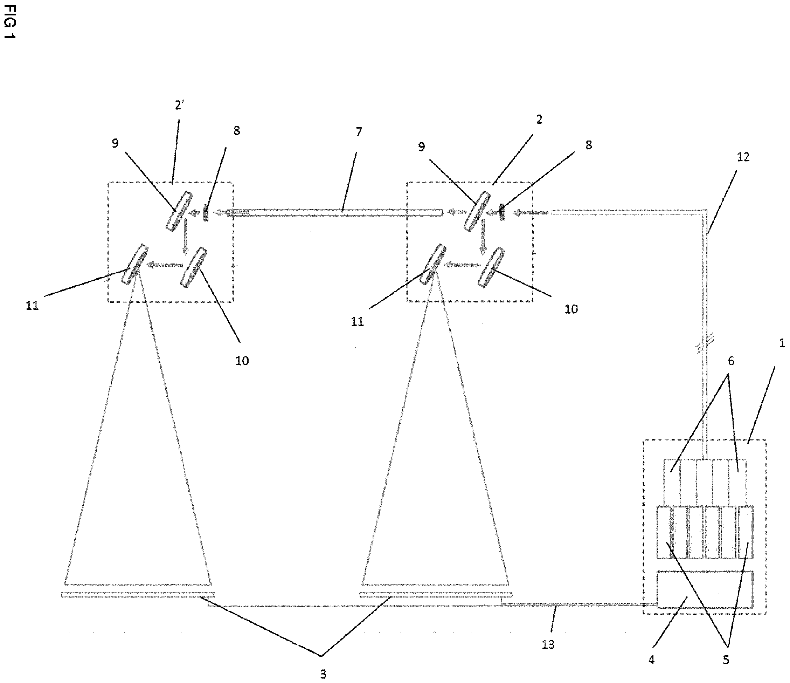

Figure 1.- shows a view of the measuring system of pollutants in motor vehicles according to the preferred embodiment of the invention for two-lane roads, where its different elements are identified.

### BRIEF DESCRIPTION OF THE INVENTION

The proposed system is defined in claim 1. It operates by measuring up and down by laser light absorption or by laser dispersion in roads and similar routes, where active elements such as lasers, detectors, computer power supply, etc., are located and accessible at the road level whereas passive optical elements are located on the upper part of each road lane (arcades), although the arrangement may change alternatively and passive optical elements may also be located on the upper part, that is, at the level of the road arcade. The light must be scanned from upper optical modules and their corresponding lanes.

The system manages to combine n laser rays with n-1 beam dividers in the output of each laser. The combined light beam would adapt to a fibre or empty pipe. There would be a specific wavelength for each fibre, and the said light beam is connected by a fibre coupler or by an anodized pipe. This pipe would go from the source module at the road level to the upper module located on the upper part of the lane.

The source module pipe must be connected to a collimator lens inside the module on the upper part of the first lane.

The light reflected by the beam divider is then redirected to a Galvo mirror through and additional mirror. The Galvo mirror scans the collimated beam along the light collectors installed in the road lane. The sweep angle of the Galvo mirror is enough to cover the width of one lane when the optical module is 5 metres high. This is the typical height of a regular arcade.

In order to avoid additional leaks, the signal between the optical modules of adjacent lanes is transmitted through an empty pipe.

This pipe must be physically connected to the upper modules, and it is an anodized pipe which avoids leaks and effects from the external environment, preferably made of aluminium and which must be isolated or coated with silver/white paint in order to avoid high temperatures inside that may affect the quality of the signal.

The overlapped light beam propagated through the tube must be divided to redirect the light both to the lower lane and to the side in order to obtain the concept of several lanes. The light must be scanned from the upper optical modules to their corresponding lanes.

At the road level light collectors are installed, which are based on flat light guides or plasmonic light collectors able to redirect the incidental signal to transmit it to the detectors. They must be connected to light conductors, such as fibre, in order to transmit the signal to the detectors located in a lower module at the side of the road.

### PREFERRED EMBODIMENT OF THE INVENTION

This new measuring system of pollutants emitted by motor vehicles in roads or similar routes allows using both light absorption techniques and laser dispersion spectroscopy techniques in order to measure the said pollutants.

This system allows determining the pollutants emitted by motor vehicles by a combination of elements installed both at a road level and over it. This system comprises a source module (1) that may be located at the level of the road or over it, particularly in the arcade; this source module (1) incorporates n laser rays (5) with n-1 beam dividers (6) and at least one detector (4) of the signal emitted by multiple collectors (3) installed on the road surface, so that each lane of the road has a collector (3). The number of laser sources (5) is determined by the wavelengths and the amount of pollutants to be measured.

The combined laser light beam would be coupled in a multicore fibre by means of a fibre coupling tube (12), although the conduction of laser beams may be alternatively carried out by any suitable means, such as an anodized pipe, and sent from the source module (1) at the road level to a first upper module (2) located on the upper part of the first lane of the road.

The pipe (12) of the source module (1) must be connected to a collimator lens (8) inside the first upper module (2) of the lane. The light reflected by the beam divider (9) is then redirected to a Galvo mirror (11) through and additional mirror (10). The Galvo mirror (11) scans the collimated beam along the light collectors (3) installed in the road lane. The sweep angle is enough to cover the width of one lane when the upper module (2) is at least 5 metres high. This is the typical height of a regular arcade on the road.

The light collectors (3) installed on each lane show flat light guides or light collectors, such as plasmonic light collectors, able to redirect the incidental signal to transmit it to the detectors (4), so the said collectors (3) must be connected to suitable tubes, for example made of fibre, (13) to transmit the signal to the detectors (4). In order to make it easier its handling, installation and maintenance, the fibre must not be rigid and the different elements must be detachable. This will allow transporting the collectors (3) without being assembled, to replace the collectors (3) and the fibres individually if it is necessary and to increase the resistance of the collector solution, since it would be made of several parts.

Since the light collectors (3) have to be installed under difficult circumstances, they must be conveniently protected. In order to protect the upper part of the collectors (3), a methacrylate part with a superhydrophobic coating without additional light leaks may be used. The coating will reject dust and water from the collector's surface.

The rest of the material to protect the collector should absorb the vibrations and be very resistant to wear. This is not considered to be a big problem, since many sensitive sensors are already installed on the road surface today with similar techniques.

In this preferred embodiment we are considering two lanes, so the other half of the signal will continue its way to a second upper module (2') of the next road lane, which shows inside the same elements that the first upper module (2), that is, a collimator lens (8), a beam divider (9), a Galvo mirror (11) and a mirror (10), so that it can be extended to all the lanes in roads with several lanes. In order to avoid additional leaks, the signal between the upper optical modules (2) of the adjacent lanes is transmitted through an empty pipe (7).

This pipe (7) must be physically connected inside the upper modules (2). The anodized empty pipe (7) must be preferably made of aluminium and must be isolated or coated with silver/white paint in order to avoid high temperatures inside that may affect the quality of the signal.

This system can perform the measurements for the analysis by laser dispersion spectroscopy, which is a gas detection technique that applies a tunable diode laser absorption spectroscopy. The usual techniques depend on the detected intensity measurement to derive the concentration. This affects significantly to measurements in "dirty" environments where the detected intensity of transmitted light fluctuates. This method derives the concentration using the light phase, which makes it highly immune to the intensity fluctuations received in the photodetector. The system allows accurate and real-time measurements of gas trace molecules in demanding environments, where intensity variations may arise due to fog, soot, particles and other interceptions of the optical trajectory. Unlike absorption, the dispersion approach has a linear response in a wide concentration range which allows low concentration measurements per billion at % level.

The release of a laser is directed to a frequency mover that divides the beam into a fundamental wave and the moved frequency. These beams are combined into a single double frequency laser beam. This double frequency beam is sent through a gas sample and it is focused into a quick photodetector that extracts the sweep note between frequency components. When the double frequency interacts with a molecular transition, both wavelengths experience slightly different refraction rates. As the laser emits frequency chirps, the difference between the propagation speeds affects the momentary frequency.

## Claims

1. A measuring system of pollutants emitted by motor vehicles in roads and similar routes, adapted to carry out
the measurement of pollutants with light absorption techniques and laser dispersion spectroscopy techniques, and comprising a source module (1) adapted to emit n laser rays (5) and incorporating n-1 beam dividers (6) for combining the n laser rays (5) into a combined light beam,
a first upper module (2) located above a first lane of a road and a second upper module (2') located above a second lane of the road, each upper module comprising a collimator lens (8), a beam divider (9), a mirror (10) and a Galvo mirror (11), such that light reflected by the beam divider (9) is redirected to the Galvo mirror (11) by the mirror (10),
a pipe (12) that couples the combined light beam from the source module (1) to the collimator lens (8) inside the first upper module (2),
an anodized empty pipe (7) connecting the first upper module (2) with the second upper module (2') and adapted to transmit the remaining portion of the combined light beam between the first upper module (2) and the second upper module (2');
at least one detector (4);
multiple collectors (3) located in each lane and connected to fibre conductors (13) to transmit the signal to the at least one detector (4);
wherein the Galvo mirror (11) is configured for scanning the collimated beam along the light collectors (3) housed in the respective road lane, such that the sweep angle is sufficient to cover a single lane width when the top module (2) is at least 5 meters high.

2. A measuring system of pollutants emitted by motor vehicles in roads and similar routes according to claim 1 where the pipe (12) connecting the source module (1) with the first upper module (2) located on the upper part of the first lane of the road is a multicore fibre coupler.

3. A measuring system of pollutants emitted by motor vehicles in roads and similar routes according to claim 1 where the pipe (12) connecting the source module (1) with the first upper module (2) located on the upper part of the first lane of the road is an anodized pipe.

4. A measuring system of pollutants emitted by motor vehicles in roads and similar routes according to claim 1 where the number of laser sources (5) is determined by the wavelengths and the amount of pollutants to be measured.

5. A measuring system of pollutants emitted by motor vehicles in roads and similar routes according to claim 1 where the light collectors (3) installed on each lane show flat light guides.

6. A measuring system of pollutants emitted by motor vehicles in roads and similar routes according to claim 1 where the collectors (3) are plasmonic light collectors.

7. A measuring system of pollutants emitted by motor vehicles in roads and similar routes according to claims 1, 5 and 6 where the upper surface of the collectors (3) comprises a methacrylate part with a superhydrophobic coating.

8. A measuring system of pollutants emitted by motor vehicles in roads and similar routes according to claim 1 where the empty anodized pipe (7) is preferably made of aluminium and must be isolated or coated with silver/white paint.

9. A measuring system of pollutants emitted by motor vehicles in roads 10 and similar routes according to claim 1 where the source module (1) is located at the road level.

10. A measuring system of pollutants emitted by motor vehicles in roads and similar routes according to claim 1 where the source module (1) is located on the road arcade.

## Patentansprüche

1. System zur Messung von Schadstoffen, die von Kraftfahrzeugen auf Straßen und ähnlichen Wegen emittiert werden, das zur Durchführung von Schadstoffmessungen mit Lichtabsorptionstechniken und Laserdispersionsspektroskopietechniken geeignet ist, und das Folgendes umfasst
ein Quellenmodul (1), das geeignet ist, n Laserstrahlen (5) zu emittieren, und das n-1 Strahlteiler (6) enthält, um die n Laserstrahlen (5) zu einem kombinierten Licht zu kombinieren
ein erstes oberes Modul (2), das über einer ersten Fahrspur der Straße angeordnet ist, und ein zweites oberes Modul (2'), das über einer zweiten Fahrspur angeordnet ist, wobei jedes obere Modul eine Kollimatorlinse (8), einen Strahlteiler (9), einen Spiegel (10) und einen Galvo-Spiegel (11) umfasst, so dass das vom Strahlteiler (9) reflektierte Licht durch den Spiegel (10) zum Galvo-Spiegel (11) umgelenkt wird, ein Rohr (12), das den kombinierten Lichtstrahl vom Quellenmodul (1) zur Kollimatorlinse (8) innerhalb des ersten oberen Moduls (2) koppelt,
ein anodisiertes Leerrohr (7), das das erste obere Modul (2) mit dem zweiten oberen Modul (2') verbindet und den verbleibenden Teil des kombinierten Lichtstrahls zwischen dem ersten oberen Modul (2) und dem zweiten oberen Modul (2') übertragen kann;
mindestens einen Detektor (4)
mehrere Kollektoren (3), die in jeder Spur angeordnet und mit Faserleitern (13) verbunden sind, um das Signal an den mindestens einen Detektor (4) zu übertragen;
wobei der Galvo-Spiegel (11) so konfiguriert ist, dass er den kollimierten Strahl entlang der Lichtsammler (3), die in der jeweiligen Fahrspur untergebracht sind, abtastet, so dass der Abtastwinkel ausreicht, um eine einzige Fahrspurbreite abzudecken, wenn das obere Modul (2) mindestens 5 Meter hoch ist.

2. Messsystem für Schadstoffemissionen von Kraftfahrzeugen auf Straßen und ähnlichen Wegen nach Anspruch 1, wobei das Rohr (12), das das Quellenmodul (1) mit dem ersten oberen Modul (2) verbindet, das sich im oberen Teil der ersten Fahrspur der Straße befindet, ein Multicore-Faserkoppler ist.

3. Messsystem für Schadstoffemissionen von Kraftfahrzeugen auf Straßen und ähnlichen Wegen nach Anspruch 1, wobei das Rohr (12), das das Quellenmodul (1) mit dem ersten oberen Modul (2) verbindet, das sich im oberen Teil der ersten Fahrspur befindet, ein eloxiertes Rohr ist.

4. System zur Messung von Schadstoffen, die von Kraftfahrzeugen auf Straßen und ähnlichen Wegen emittiert werden, nach Anspruch 1, wobei die Anzahl der Laserquellen (5) durch die Wellenlängen und die Menge der zu messenden Schadstoffe bestimmt wird.

5. Messsystem für Schadstoffemissionen von Kraftfahrzeugen auf Straßen und ähnlichen Wegen nach Anspruch 1, bei dem die auf jeder Fahrspur installierten Lichtkollektoren (3) flache Lichtleiter aufweisen.

6. Schadstoffmesssystem für Kraftfahrzeuge auf Straßen und ähnlichen Wegen nach Anspruch 1, wobei die Kollektoren (3) plasmonische Lichtkollektoren sind.

7. Schadstoffmeßsystem für Kraftfahrzeuge auf Straßen und ähnlichen Wegen nach einem der Ansprüche 1, 5 und 6, wobei die Oberseite der Kollektoren (3) ein Methacrylatteil mit einer superhydrophoben Beschichtung aufweist.

8. Meßsystem für von Kraftfahrzeugen auf Straßen und ähnlichen Wegen emittierte Schadstoffe nach Anspruch 1, wobei das anodisierte Leerrohr (7) vorzugsweise aus Aluminium besteht und isoliert oder mit silberweißer Farbe beschichtet sein muß.

9. Schadstoffmesssystem für Kraftfahrzeuge auf Straßen und ähnlichen Wegen nach Anspruch 1, bei dem das Quellmodul (1) auf Straßenniveau angeordnet ist.

10. Schadstoffmesssystem für Kraftfahrzeuge auf Straßen und ähnlichen Wegen nach Anspruch 1, bei dem das Quellenmodul (1) auf der Fahrbahn angeordnet ist.

## Revendications

1. Un système de mesure des polluants émis par les véhicules à moteur sur les routes et itinéraires similaires, adapté pour effectuer la mesure des polluants avec des techniques d'absorption de lumière et des techniques de spectroscopie de dispersion laser, et comprenant un module source (1) adapté pour émettre n rayons laser (5) et incorporant n-1 diviseurs de faisceau (6) pour combiner les n rayons laser (5) en une lumière combinée
un premier module supérieur (2) situé au-dessus d'une première voie de la route et un second module supérieur (2') situé au-dessus d'une seconde voie, chaque module supérieur comprenant une lentille collimatrice (8), un diviseur de faisceau (9), un miroir (10) et un miroir de Galvo (11), de sorte que la lumière réfléchie par le diviseur de faisceau (9) est redirigée vers le miroir de Galvo (11) par le miroir (10), un tuyau (12) qui couple le faisceau lumineux combiné provenant du module source (1) à la lentille de collimateur (8) à l'intérieur du premier module supérieur (2),
un tuyau vide anodisé (7) reliant le premier module supérieur (2) au second module supérieur (2') et adapté pour transmettre la partie restante du faisceau lumineux combiné entre le premier module supérieur (2) et le second module supérieur (2') ;
au moins un détecteur (4)
de multiples collecteurs (3) situés dans chaque couloir et connectés à des conducteurs de fibres (13) pour transmettre le signal à l'au moins un détecteur (4) ;
dans lequel le miroir de Galvo (11) est configuré pour balayer le faisceau collimaté le long des collecteurs de lumière (3) logés dans la voie de circulation respective, de sorte que l'angle de balayage est suffisant pour couvrir une largeur de voie unique lorsque le module supérieur (2) est au moins de 5 mètres de haut.

2. Système de mesure des polluants émis par les véhicules à moteur sur les routes et voies similaires selon la revendication 1, dans lequel le tuyau (12) reliant le module source (1) au premier module supérieur (2) situé sur la partie supérieure de la première voie de la route est un coupleur à fibre multiconducteur.

3. Système de mesure des polluants émis par les véhicules à moteur sur les routes et voies similaires selon la revendication 1, où le tuyau (12) reliant le module source (1) au premier module supérieur (2) situé sur la partie supérieure de la première voie de la route est un tuyau anodisé.

4. Système de mesure des polluants émis par les véhicules à moteur sur les routes et voies similaires selon la revendication 1, dans lequel le nombre de sources laser (5) est déterminé par les longueurs d'onde et la quantité de polluants à mesurer.

5. Système de mesure des polluants émis par les véhicules à moteur sur les routes et itinéraires similaires selon la revendication 1, dans lequel les collecteurs de lumière (3) installés sur chaque voie présentent des guides de lumière plats.

6. Système de mesure des polluants émis par les véhicules à moteur sur les routes et itinéraires similaires selon la revendication 1, dans lequel les collecteurs (3) sont des collecteurs de lumière plasmonique.

7. Système de mesure des polluants émis par les véhicules à moteur sur les routes et itinéraires similaires selon les revendications 1, 5 et 6, dans lequel la surface supérieure des collecteurs (3) comprend une partie en méthacrylate avec un revêtement superhydrophobe.

8. Système de mesure des polluants émis par les véhicules à moteur sur les routes et itinéraires similaires selon la revendication 1, dans lequel le tube anodisé vide (7) est de préférence en aluminium et doit être isolé ou revêtu d'une peinture argentée/blanche.

9. Système de mesure des polluants émis par les véhicules à moteur sur les routes et itinéraires similaires selon la revendication 1, dans lequel le module source (1) est situé au niveau de la route.

10. Système de mesure des polluants émis par les véhicules à moteur sur les routes et itinéraires similaires selon la revendication 1, dans lequel le module source (1) est situé sur l'arcade routière.
